# EUROPÄISCHE PATENTSCHRIFT

(11) **EP 2 794 477 B1**
(45) Veröffentlichungstag und Bekanntmachung des Hinweises auf die Patenterteilung: **23.03.2016**
(21) Anmeldenummer: 12809687.2
(22) Anmeldetag: 12.12.2012
(51) Int. Cl.: C01B 33/029, C01B 33/035

(54) **POLYKRISTALLINER SILICIUMSTAB UND VERFAHREN ZUR HERSTELLUNG VON POLYSILICIUM**
POLYCRYSTALLINE SILICON ROD AND METHOD FOR PRODUCING POLYSILICON
BARREAU DE SILICIUM POLYCRISTALLIN ET PROCÉDÉ DE PRODUCTION DE POLYSILICIUM

(30) Priorität: 21.12.2011 DE 102011089449
(43) Veröffentlichungstag der Anmeldung: 29.10.2014
(73) Patentinhaber: Wacker Chemie AG, 81737 München (DE)
(72) Erfinder: SOFIN, Mikhail, 84489 Burghausen (DE); DORNBERGER, Erich, 84489 Burghausen (DE); PECH, Reiner, 84524 Neuötting (DE)
(74) Vertreter: Potten, Holger
(86) Internationale Anmeldenummer: PCT/EP2012/075208
(87) Internationale Veröffentlichungsnummer: WO 2013/092337

(56) Entgegenhaltungen:
- EP-A1- 0 445 036
- EP-A1- 1 886 971
- EP-A2- 1 992 593
- WO-A1-2011/033712
- WO-A2-2009/047107
- DATABASE WPI Week 200442 Thomson Scientific, London, GB; AN 2004-444472 XP002693078, & JP 2004 149324 A (MITSUBISHI SUMITOMO SILICON KK) 27. Mai 2004 (2004-05-27)

## Beschreibung

Polykristallines Silicium (kurz: Polysilicium) dient als Ausgangsmaterial zur Herstellung von einkristallinem Silicium für Halbleiter nach dem Czochralski(CZ)- oder Zonenschmelz(FZ)-Verfahren, sowie zur Herstellung von ein- oder multikristallinem Silicium nach verschiedenen Zieh- und GießVerfahren zur Produktion von Solarzellen für die Photovoltaik.

Polykristallines Silicium wird in der Regel mittels des Siemens-Verfahrens hergestellt. Bei diesem Verfahren werden in einem glockenförmigem Reaktor ("Siemens-Reaktor") Trägerkörper, üblicherweise dünne Filamentstäbe aus Silicium, durch direkten Stromdurchgang erhitzt und ein Reaktionsgas enthaltend Wasserstoff und eine oder mehrere siliciumhaltige Komponenten eingeleitet.

Üblicherweise wird als siliciumhaltige Komponente Trichlorsilan (SiHCl₃, TCS) oder eine Mischung von Trichlorsilan mit Dichlorsilan (SiH₂Cl₂, DCS) und/oder mit Tetrachlorsilan (SiCl₄, STC) eingesetzt. Seltener, aber auch im industriellen Maßstab wird Silan (SiH₄) verwendet.

Die Filamentstäbe stecken senkrecht in am Reaktorboden befindlichen Elektroden, über die der Anschluss an die Stromversorgung erfolgt.

An den erhitzten Filamentstäben und der waagrechten Brücke scheidet sich hochreines Polysilicium ab, wodurch deren Durchmesser mit der Zeit anwächst.

Der Abscheideprozess wird üblicherweise durch die Vorgabe von Stabtemperatur und Reaktionsgasstrom bzw. -zusammensetzung gesteuert.

Die Messung der Stabtemperatur erfolgt mit Strahlungspyrometern meistens an den der Reaktorwand zugewandten Oberflächen der Stäbe.

Die Stabtemperatur wird durch Steuerung oder Regelung der elektrischen Leistung entweder fest oder in Abhängigkeit vom Stabdurchmesser vorgegeben.

Die Menge und die Zusammensetzung des Reaktionsgases werden in Abhängigkeit von der Zeit oder dem Stabdurchmesser vorgegeben.

Nach dem Erreichen eines gewünschten Durchmessers wird die Abscheidung beendet und die hierbei entstandenen PolysiliciumStäbe auf Raumtemperatur abgekühlt.

Nach Abkühlung der Stäbe wird die Reaktorglocke geöffnet und die Stäbe werden per Hand oder mit Hilfe von speziellen Vorrichtungen, sogenannten Ausbauhilfen (siehe z.B. EP 2 157 051 A2) zur Weiterverarbeitung bzw. zur zwischenzeitlichen Lagerung entnommen.

Sowohl die Lagerung als auch die Weiterverarbeitung, vor allem ein Zerkleinern der Stäbe, ein Klassieren und eine Verpackung gebrochener Stücke, erfolgen in der Regel unter besonderen Umgebungsbedingungen in klimatisierten Räumen, was eine Verunreinigung des Produktes verhindert.

Zwischen dem Zeitpunkt des Öffnens des Reaktors und bis zur Einlagerung bzw. Weiterverarbeitung ist das abgeschiedene Material allerdings umgebungsbedingten Einflüssen, insbesondere Staubpartikelchen, ausgesetzt.

Morphologie und Mikrostruktur des wachsenden Stabes werden von den Parametern des Abscheideprozesses bestimmt.

Die Abscheidung mit TCS bzw. dessen Mischung mit DCS und/oder STC erfolgt üblicherweise bei Stabtemperaturen zwischen 900 und 1100 °C, einer Zufuhr von siliciumhaltigen Komponente(n) (in Summe) von 0,5 bis 10 kMol/h pro 1 m² der Staboberfläche, wobei der Mol-Anteil dieser Komponente(n) im Zugasstrom (in Summe) zwischen 10% und 50% liegt (der Rest 90% bis 50% ist üblicherweise Wasserstoff).

Die Angaben zu Stabtemperatur hier und an anderen Stellen beziehen sich (falls nicht explizit erwähnt) auf Werte, die im senkrechten Stabbereich mindestens 50 cm oberhalb der Elektrode und mindesten 50 cm unterhalb der Brücke gemessen werden.

In anderen Bereichen kann die Temperatur davon deutlich abweichen. So werden z.B. im Brückeninnenbogen signifikant höhere Werte gemessen, da in diesem Bereich der Stromfluss anders verteilt ist.

Bei diesen Bedingungen abgeschiedene polykristalline Siliciumstäbe sind mattgrau und bestehen aus Kristalliten mit einer mittleren Größe von 1 bis ca. 20 µm.

Die Kristallitengröße kann zum Beispiel mittels optischer Mikroskopie abgeschätzt werden. Die Elektronmikroskopie (REM) erlaubt eine räumliche Erfassung von fast jedem einzelnen Si-Korn, was eine über eine statistische Auswertung genauere Messung der mittleren Kristallitengröße ermöglicht.

Aufgrund der unterschiedlichsten Formen der Si-Körner wird deren Größe üblicherweise rechnerisch aus der Fläche ermittelt (für die Umrechnung wird die idealisierte runde Form des Querschnittes angenommen).

Wegen der starken Oberflächenkrümmung, besonders bei porösem und zerklüftetem Material, wird die Messung der Rauhigkeit in der Regel nicht über eine Teststrecke Lt von 15 mm (wie DIN EN ISO 4288 vorschreibt), sondern über die Teststrecke von 1,5 mm durchgeführt. Diese angepasste Methode wurde bei allen Rauhigkeitsmessungen im Rahmen der Erfindung angewendet.

Bei der Abscheidung mit Silan, welche bei deutlich niedrigeren Temperaturen (400-900 °C), Durchflüssen (0,01 bis 0,2 kMol/h Silan pro 1 m² der Staboberfläche) und Konzentrationen (0,5-2% Silan im Wasserstoff) durchgeführt wird, bestehen PolysiliciumStäbe aus deutlich kleineren Kristalliten (0,01-0,5 µm). Die Oberfläche der Stäbe ist ebenfalls mattgrau und weist Rauhigkeitswerte Ra von 2,5-3,5 µm auf.

Die Morphologie der abgeschiedenen Stäbe kann von kompaktem und glattem (wie z.B. in US 6,350,313 B2 beschrieben) bis zu sehr porösem und zerklüftetem Material (wie beispielweise in US2010/219380 A1 beschrieben) variieren.

Die kompakten Stäbe sind teurer in der Produktion, führen aber oft zu besseren Ausbeuten bei nachfolgenden Kristallisationsschritten.

Die Steigerung der oben beschriebenen Grundparameter (Temperatur der Stäbe, spezifischer Durchfluss, Konzentration) führt im Allgemeinen zur Erhöhung der Abscheidegeschwindigkeit und damit zur Verbesserung der Wirtschaftlichkeit des Abscheideprozesses.

Jedem dieser Parameter sind allerdings natürliche Grenzen gesetzt, bei deren Überschreitung der Herstellprozess gestört wird (je nach Konfiguration des eingesetzten Reaktors liegen die Grenzen etwas unterschiedlich).

Wird z.B. die Konzentration der Si-haltigen Komponente(n) zu hoch gewählt, kommt es gegebenenfalls zu homogener Gasphasenabscheidung.

Eine zu hohe Stab-Temperatur kann dazu führen, dass die Morphologie der abzuscheidenden Siliciumstäbe nicht kompakt genug wird, um dem mit dem wachsenden Stabdurchmesser steigenden Stromdurchfluss eine ausreichende Querschnittfläche zur Verfügung zu stellen.

Zu hoch werdende Stromdichte kann dabei das Schmelzen von Silicium verursachen.

Bei Stäben mit großem Durchmesser (ab 120 mm) ist die Temperaturwahl noch kritischer, da selbst bei kompakter Morphologie Silicium im Stabinneren (aufgrund der hohen Temperaturdifferenzen zwischen der Oberfläche und dem Stabzentrum) flüssig werden kann.

Auch Anforderungen an das Produkt von Kunden aus Halbleiter- und Solar-Industrie schränken die Bereiche der Prozessparameter deutlich ein.

So werden zum Beispiel für FZ-Anwendungen Siliciumstäbe benötigt, die von Rissen, Poren, Fugen, Klüften, usw. weitestgehend frei und damit homogen, dicht und fest sind.

Außerdem sollten sie für eine bessere Ausbeute beim FZ-Ziehen bevorzugt eine besondere Mikrostruktur ausweisen. Ein derartiges Material und das Verfahren zu seiner Herstellung werden beispielsweise in US2008/286550 A1 beschrieben.

Für die Herstellung von Nachchargierstäben und sogenannten Cutrods, die hauptsächlich beim CZ-Verfahren zur Steigerung des Tiegelfüllgrades eingesetzt werden, werden ebenfalls rissfreie und spannungsarme polykristalline Silicium-Rohstäbe benötigt.

Im Stand der Technik wird angenommen, dass bei CZ-Verfahren die Mikrostruktur des eingesetzten Polysiliciums keine Rolle spielt. Bei der mechanischen Fertigung von Cutrods, FZ- und Nachchargierstäben mittels Sägen wird deren Oberfläche stark verunreinigt. Aus diesem Grund durchlaufen diese Produkte in der Regel anschließend noch einen Reinigungsschritt.

Für die meisten Anwendungen werden polykristalline Siliciumstäbe allerdings auf kleine Stücke gebrochen, welche üblicherweise anschließend nach Größen klassiert werden.

Eine Verfahren und eine Vorrichtung zum Zerkleinern und Sortieren von Polysilicium ist beispielweise in US 2007/235574 A1 beschrieben.

Bei der Verarbeitung auf Bruchstücke werden als Ausgangsmaterial Stäbe mit Rissen und weiteren Materialfehlern akzeptiert. Auch die Mikrostruktur der polykristallenen Stäbe wird im Stand der Technik als nicht relevant betrachtet.

Die Morphologie polykristalliner Stäbe sowie daraus entstandener Bruchstücke hat jedoch einen starken Einfluss auf die Performance des Produkts.

Üblicherweise hat eine poröse und zerklüftete Morphologie eine negative Auswirkung auf das Kristallisationsverhalten.

Besonders stark betroffen ist das anspruchsvolle CZ-Verfahren, bei welchem wegen der wirtschaftlich nicht akzeptablen Ausbeuten poröse und zerklüftete Bruchstücke nicht eingesetzt werden konnten.

Andere Kristallisationsverfahren (z.B. das zur Herstellung von Solarzellen am häufigsten eingesetzte Blockgießen) sind weniger Morphologieempfindlich. Hier kann der negative Einfluss des porösen und zerklüfteten Materials durch seine geringeren Herstellkosten wirtschaftlich kompensiert werden.

Zur Verbesserung der Performance bei nachfolgenden Kristallisationsschritten können beim Zerkleinern Siliciumstäbe entstandene Silicium-Bruchstücke nachbehandelt werden.

Beispielsweise kann die Produktqualität mittels eines Reinigungsschrittes erhöht werden.

Die Reinigung, welche normalerweise nasschemisch mit einer oder mehreren Säuren oder Säuregemischen erfolgt (siehe z.B. US6,309,467 B1), ist sehr aufwändig und teuer, verbessert aber in der Regel die Produkteigenschaften.

Bei Silicium-Bruchstücken mit poröser bzw. zerklüfteter Morphologie kann die nasschemische Reinigung allerdings keine Performanceverbesserung bewirken.

Die Aufgabe der vorliegenden Erfindung bestand darin, ein neues kostengünstiges Verfahren zur Herstellung von polykristallinem Silicium zu finden, welches dessen Eigenschaften derart verändert, dass eine gute Ziehperformance bei nachfolgenden Kristallisationsschritten, speziell bei monokristallinen CZ-Anwendungen, ermöglicht wird. Besonders vorteilhaft wird es, wenn die Ziehperformance von porösen und zerklüfteten Siliciumstäben bzw. daraus entstandenen Si-Bruchstücken verbessert wird, weil dieses Material am günstigsten hergestellt werden kann.

Die Aufgabe der Erfindung wird gelöst durch einen polykristallinen Siliciumstab, umfassend eine äußere Schicht aus polykristallinem Silicium mit einer Dicke von 0,01 bis 20 mm, wobei diese äußere Schicht Kristallite mit einer mittleren Größe von mehr als 20 µm bis maximal 80 µm beinhaltet.

Vorzugsweise beträgt die mittlere Größe der Kristallite der äußeren Schicht 25-60 µm, besonders bevorzugt 30-60 µm, ganz besonders bevorzugt 35-55 µm.

Vorzugsweise weist der polykristalline Siliciumstab unterhalb der äußeren Schicht eine poröse oder zerklüftete Struktur auf.

Vorzugsweise ist die Struktur im Innern des polykristallinen Siliciumstabs gleichartig (weist also im Innern die gleiche Kristallstruktur, Kristallitgröße usw. auf), wobei sie Poren, Fugen, Spalten, Risse und Klüfte umfasst.

Vorzugsweise besteht die äußere Schicht aus Kristalliten mit einer mittleren Größe, die größer ist als die mittlere Größe der Kristallite unterhalb der äußeren Schicht.

Vorzugsweise beträgt die mittlere Größe der Kristallite unterhalb der äußeren Schicht 1 µm bis maximal 20 µm.

Vorzugsweise beträgt die mittlere Größe der Kristallite unterhalb der äußeren Schicht 2-18 µm.

Vorzugsweise beträgt die mittlere Größe der Kristallite unterhalb der äußeren Schicht 10-17 µm.

Vorzugsweise beträgt die mittlere Größe der Kristallite der äußeren Schicht 25-80 µm und die mittlere Größe der Kristallite unterhalb der äußeren Schicht 1-20 µm.

Vorzugsweise beträgt die mittlere Größe der Kristallite der äußeren Schicht 30-60 µm und die mittlere Größe der Kristallite unterhalb der äußeren Schicht 1-25 µm.

Vorzugsweise beträgt die mittlere Größe der Kristallite der äußeren Schicht 35-55 µm und die mittlere Größe der Kristallite unterhalb der äußeren Schicht 1-30 µm.

Vorzugsweise beträgt die Oberflächenrauigkeit 4-10 µm, besonders bevorzugt 5-8 µm.

Die Erfinder haben erkannt, dass eine Änderung der Prozessparameter während eines zweiten Schritts der Abscheidung zu einem verbesserten Produkt führt.

Die Herstellung eines solchen polykristallinen Siliciumstabs sieht vor, beim Siemens-Verfahren den abschließenden Teil des Abscheideprozesses, also den zweiten Schritt der Abscheidung, unter besonderen Bedingungen durchzuführen.

Daher wird die Aufgabe der Erfindung auch gelöst durch ein Verfahren zur Herstellung von Polysilicium durch Einleiten eines Reaktionsgases enthaltend eine Silicium enthaltende Komponente und Wasserstoff in einen Reaktor, wodurch polykristallines Silicium in Form von Stäben abgeschieden wird, dadurch gekennzeichnet, dass in einem zweiten, abschließenden Schritt der Abscheidung, der eine Dauer von 0,1 bis 50 Stunden umfasst, eine Temperatur der Stäbe um mindestens 50 °C gegenüber einem ersten Schritt erhöht wird und mehr als 1100°C beträgt, wobei im zweiten, abschließenden Schritt der Abscheidung eine Konzentration der Silicium enthaltenden Komponente im Reaktionsgas 5 Mol-% oder weniger und eine Zufuhr der Silicium enthaltenden Komponente 0,25 mol pro 1 m² Staboberfläche oder weniger betragen.

So haben die Erfinder erkannt, dass Siliciumstäbe sowie - nach deren Zerkleinern - Siliciumbruchstücke mit vorteilhaften Eigenschaften für nachfolgende Kristallisationsschritte resultieren, wenn bei den letzen 0,1 bis 50 Stunden, bevorzugt 0,5 bis 10 Stunden, der Abscheidung, welche mit TCS oder dessen Mischung mit DCS und/oder mit STC erfolgt, die Prozessparameter im zweiten Schritt wie folgt geändert werden:
- die Stabtemperatur wird auf mehr als 1100 °C, bevorzugt auf mehr als 1150 °C, und um mindestens 50 °C im Vergleich zum ersten Schritt der Abscheidung angehoben und
- die Konzentration der siliciumhaltige(n) Komponente(n) (in Summe) wird auf 5 Mol-% oder weniger, bevorzugt auf 3 Mol-% oder weniger reduziertund
- die Zufuhr der siliciumhaltigen Komponente(n) in den Abscheidereaktor (in Summe) wird auf 0,25 kMol/h pro 1 m² Staboberfläche oder weniger, bevorzugt auf 0,1 kMol/h pro 1 m² Staboberfläche oder weniger reduziert.

Bei diesen Bedingungen entsteht bei den Stäben eine äußere Schicht, welche sich deutlich vom Material im Stabinneren unterscheidet und dem Produkt günstige Eigenschaften verschafft, die bei nachfolgenden Kristallisationsschritten positiv auf die Performance auswirken.

Dies war überraschend, weil bisher im Stand der Technik davon ausgegangen wurde, dass die Mikrostruktur der polykristallinen Stäbe beim CZ-Verfahren keine Rolle spielt. Besonders überraschend war, dass bereits eine dünne Oberflächenschicht von 0,01 bis 20 mm mit veränderter Kristallitstruktur zu einer deutlich besseren Ziehperformance führte.

Der spezielle Vorteil der Erfindung besteht darin, dass die letzte Schicht mit besonderen Eigenschaften auch auf Siliciumstäbe mit poröser und zerklüfteter Morphologie, die im Vergleich zum kompakten und glatten Material deutlich niedrigere Herstellkosten haben, aufgebracht werden kann.

Dadurch lassen sich diese Stäbe oder Siliciumbruchstücke, die beim Brechen erfindungsgemäßer Stäbe entstehen, bei der nachfolgenden Kristallisation ohne Einbußen bei der Ausbeute und Produktivität einsetzen.

Bei diesem erfindungsgemäßen Verfahren entstehen polykristalline Siliciumstäbe, welche im Stand der Technik noch nicht bekannt sind.

Sie zeichnen sich - wie zuvor beschrieben - u.a. dadurch aus, dass sie eine äußere polykristalline Schicht aufweisen, die zwischen 0,01 und 20 mm, bevorzugt zwischen 0,1 und 10 mm, ganz besonders bevorzugt zwischen 0,1 und 5 mm dick ist, und im Vergleich zu den inneren abgeschiedenen Schichten eine gröbere Mikrostruktur aufweist.

Die Abscheidung des polykristallinen Siliciums erfolgt vorzugsweise an durch direkten Stromdurchgang erhitzten Filamentstäben aus Silicium.

Ein Filamentstab wird aus zwei senkrechten und einem waagrechten Stab gebildet, wobei der waagrechte Stab eine verbindende Brücke zwischen den senkrechten Stäben bildet (= u-förmiger Trägerkörper).

Als Silicium enthaltende Komponente des Reaktionsgases wird vorzugsweise TCS oder eine Mischung von TCS und DCS oder eine Mischung von TCS und STC verwendet.

Vorzugsweise ist während des ersten Schritts der Abscheidung der Stromdurchgang durch den Filamentstab derart geregelt, dass die Stabtemperatur zwischen 1000 und 1100 °C liegt (die an der Unterseite der Brücke gemessene Temperatur beträgt dabei zwischen 1300 und 1413 °C). Die Temperatur der Reaktionsgase im Reaktor wird gemessen und so eingestellt, dass sie höchstens 650 °C beträgt, und der Mengenstrom des Chlorsilangemisches in weniger als 30 Stunden, bevorzugt in weniger als 5 Stunden ab Beginn der Zufuhr des Chlorsilangemisches auf seinen Maximalwert eingestellt wird.

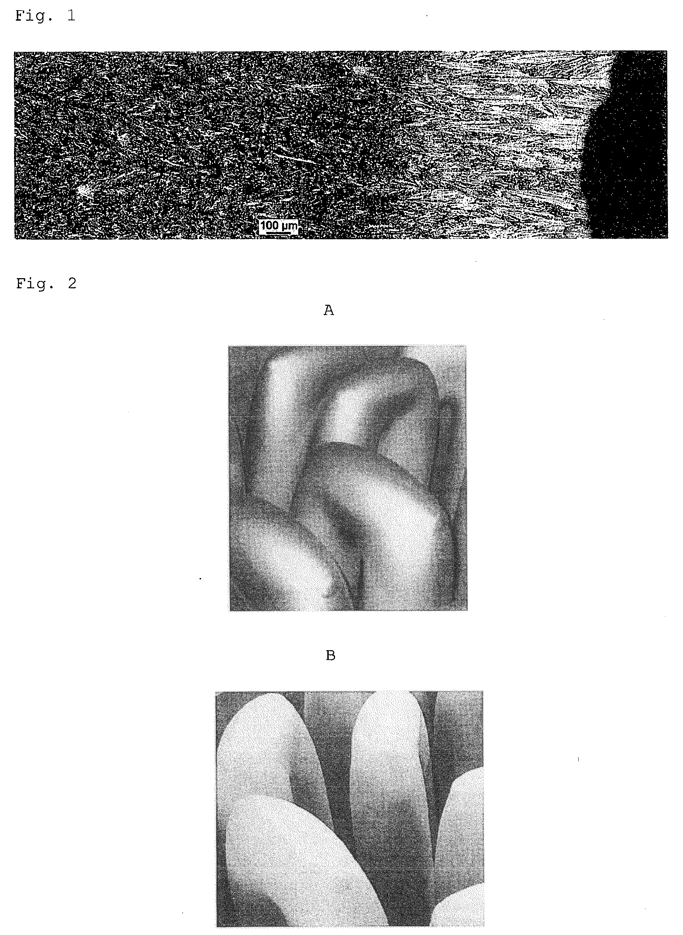

Die Erfindung wird nachfolgend anhand von **Fig. 1** und **2** erläutert.

**Fig. 1** zeigt die Mikrostruktur eines erfindungsgemäßen Stabes (senkrecht zur Stabachse).

**Fig. 2** zeigt einen Vergleich der Oberfläche von erfindungsgemäßen Stäben (links, glänzend) und Stäben gemäß Stand der Technik (rechts, matt).

**Fig. 1** zeigt die Mikrostruktur des äußeren Bereiches des erfindungsgemäßen polykristallinen Siliciumstabes.

Im rechten Teil von **Fig. 1** ist eine deutlich gröbere Mikrostruktur der äußeren Schicht im Vergleich zum Stabinneren (links) sichtbar. Die Dicke der äußeren Schicht beträgt etwa 0,8 mm.

Die äußere Schicht wird aus Mikrokristalliten gebildet, welche eine Größe im Mittel 30 µm oder mehr, bevorzugt 50 µm oder mehr haben.

Die Rauhigkeit der Oberfläche Ra (gemessen nach DIN EN ISO 4288, aber über die kürzere Teststrecke von 1,5 mm) beträgt dabei 5 mm oder mehr.

Außerdem unterscheiden sich die erfindungsgemäßen Stäbe von denen aus dem Stand der Technik vorzugsweise dadurch, dass sie glänzend sind.

In **Fig. 2** sind die erfindungsgemäßen glänzenden Stäbe A im Vergleich zu den mattgrauen Stäben **B** aus dem Stand der Technik gezeigt.

Ein weiteres Merkmal, das die erfindungsgemäßen polykristallinen Siliciumstäbe von den im Stand der Technik bekannten Stäben unterscheidet, ist ihr Verhalten gegenüber Säuren.

Beim Eintauchen eines bekannten Siliciumstabes (bzw. eines daraus entstandenen Bruchstückes, welches äußere Oberfläche des ursprünglichen Stabes enthält) in eine 1:1 Mischung aus 20 bis 30%iger HNO₃ und 2 bis 3%iger HF wird die Bildung von Wasserstoff-Bläschen (beim Bruchstück an der Fläche, die von der Oberfläche des ursprünglichen Stabes stammt, also nicht an der Bruchfläche) schon nach 160 Sekunden beobachtet, während beim erfindungsgemäßen Stab sie erst nach 180 Sekunden beginnt.

Das neue Verfahren hat keinen Einfluss auf das Bruchverhalten.

Der erfindungsgemäße Polysiliciumstab, welcher eine äußere grobkristalline Schicht enthält, kann wie ein bekannter Stab ohne diese Schicht zerkleinert werden.

Er liefert die gleiche Bruchgrößenverteilung, gleiche Sphärizität und gleiches Breite/Länge-Verhältnis der Bruchstücke wie ein bekannter Polysiliciumstab.

Denkbar ist auch ein Abscheideprozess, bei dem man die grobkristalline Schicht durch die oben beschriebene Umstellung der Prozessparameter mehrmals erzeugt und so Polysiliciumstäbe mit so einer Art Zwiebelschalenstruktur herstellt.

Es zeigte sich jedoch, dass dadurch die Ziehperformance bei den nachfolgenden Kristallisationsschritten im Vergleich zu den Stäben mit einer Außenschicht nur geringfügig verbessert werden kann.

Vorzugsweise erfolgt der Ausbau von Siliciumstäben aus dem Reaktor nach Beendigung der Abscheidung, während die Stäbe von einem kontaminationsfreien Gas umströmt werden. Dies verhindert den Kontakt der Umgebungsluft mit den Stäben. Vorzugsweise wird als kontaminationsfreies Gas Stickstoff oder ein Edelgas verwendet. Vorzugsweise wird Stickstoff oder Argon verwendet. Bezüglich des Vorgehens bei der Spülung des Reaktors bzw. der Stäbe mit Inertgas sowie die technische Ausgestaltung im Detail wird in vollem Umfang Bezug genommen auf US 7,927,571.

Vorzugsweise werden abgeschiedene Siliciumstabpaare bzw. Trägerkörper vor dem Ausbau mit Säcken überzogen.

Vorzugsweise bestehen die Säcke aus einer Polymerfolie, besonders bevorzugt aus einer Polyethylenfolie.

Durch diese besondere Vorgehensweise beim Ausbau der Stäbe aus dem Abscheidereaktor kann die Performance der Polysiliciumstäbe bzw. daraus entstandene Bruchstücke bei nachfolgenden Kristallisationsschritten weiter verbessert werden.

Vorzugsweise werden die Siliciumstäbe nach Ausbau aus dem Reaktor in Bruchstücke zerkleinert, entstaubt und gegebenenfalls gereinigt.

Das Entstauben erfolgt vorzugsweise wie in den nichtvorveröffentlichten Anmeldungen mit den Anmeldeaktenzeichen EP11178284.3 bzw. US 13/197977 beschrieben, auf die hier in vollem Umfang Bezug genommen wird.

In einem Verfahren zur Herstellung von Polysilicium durch Einleiten eines Reaktionsgases enthaltend eine Silicium enthaltende Komponente und Wasserstoff in einen Reaktor, wodurch polykristallines Silicium in Form von Stäben abgeschieden wird, kann nach Beendigung der Abscheidung das stabförmige polykristalline Silicium von einem kontaminationsfreien Gas umströmt, mit einem Sack aus Kunststoff überzogen und aus dem Reaktor entfernt werden.

Die Abscheidung des Polysiliciums erfolgt vorzugsweise auf einem U-förmiger Trägerkörper aus Silicium. Während der Abscheidung ist der Reaktor luftdicht verschlossen.
Der U-förmige Trägerkörper wird durch direkten Stromdurchgang aufgeheizt. Das Reaktionsgas wird durch eine Zuführleitung in den Reaktor eingeleitet, wodurch auf dem u-förmigen Trägerkörper Silicium aus dem Reaktionsgas abgeschieden wird und dessen Durchmesser wächst. Es entsteht ein polykristallines u-förmiges Stabpaar.

Bei der Abscheidung entstehendes Abgas wird durch eine Abführleitung aus dem Reaktor entfernt.
Bei Beendigung der Abscheidung - falls der gewünschte Durchmesser erreicht ist - wird der Trägerkörper bzw. das Stabpaar auf Raumtemperatur abgekühlt.
Der Reaktor wird geöffnet und der Trägerkörper aus dem Reaktor entfernt.

Beginnend beim Öffnen des Reaktors bis zur Entfernung des Trägerkörpers bzw. des Stabpaares aus dem Reaktor wird ein kontaminationsfreies Gas durch die Zuführleitung und die Abführleitung hindurch in den geöffneten Reaktor geführt. Vorzugsweise wird als kontaminationsfreies Gas Stickstoff oder ein Edelgas verwendet. Vorzugsweise wird Stickstoff oder Argon verwendet.

Bezüglich des Vorgehens bei der Spülung des Reaktors bzw. der Stäbe mit Inertgas sowie die technische Ausgestaltung im Detail wird in vollem Umfang Bezug genommen auf US 7,927,571.

Dies verhindert einen Kontakt der Umgebungsluft mit den Stäben.

Zudem wird der Trägerkörper bzw. das Stabpaar vor dem Ausbau mit einem Sack aus einem Kunststoff überzogen.

Vorzugsweise bestehen die verwendeten Säcke aus einer Polymerfolie oder aus einer Polyethylenfolie.

Durch diese besondere Vorgehensweise beim Ausbau der Stäbe aus dem Reaktor kann die Performance der Polysiliciumstäbe bzw. daraus erzeugter Bruchstücke bei nachfolgenden Kristallisationsschritten verbessert werden, wie **Beispiel 5** zeigt.

### Beispiele

Im Folgenden wird die Erfindung anhand von Beispielen und Vergleichsbeispielen erläutert.

Dazu wurden polykristalline Siliciumstäbe mit verschieden Abscheideprozessen hergestellt. Anschließend wurden die hergestellten Siliciumstäbe in Bruchstücke zerkleinert. Diese wurden abschließend in einem CZ-Ziehprozess eingesetzt.

Zur Beurteilung der Ziehperformance wurde die Ausbeute herangezogen, welche zeigt, wie viel Gewichtsprozent des eingesetzten polykristallinen Materials in einen brauchbaren versetzungsfreien Einkristall überführt werden konnte.

Bei allen unten aufgelisteten Tests wurden Silicium-Einkristalle mit dem gleichen CZ-Ziehprozess gezogen (Tiegeleinwaage 90 kg, Kristalldurchmesser 8 Zoll, Kristallorientierung <100>, Ziehgeschwindigkeit 1 mm/h).

Bei Verwendung anderer Ziehprozesse verhalten sich diese unterschiedlichen Materialien relativ zueinander ähnlich, wobei die absoluten Ausbeutezahlen je nach Schwierigkeitsgrad des Ziehprozesses anders ausfallen können.

### Beispiel 1 (Vergleichsbeispiel)

Es wurden kompakte polykristalline Siliciumstäbe nach Stand der Technik abgeschieden.

Der entsprechende Prozess ist aus US 2010/219380 A1 bekannt. Die Bedingungen entsprachen den in Comparative example 1 offenbarten.

Die mittlere Kristallitengröße im abgeschiedenen Material betrug etwa 11 µm. Die Rauhigkeit der Oberfläche Ra lag bei 3,6 µm.

Abschließend wurden die Stäbe - wie in US2007/235574 A1 beschrieben - in Bruchstücke gebrochen.

Anschließend erfolgte eine nasschemische Behandlung der Bruchstücke, wie in US2010/001106 A1 offenbart.

Beim Einsatz dieses Materials in dem oben beschriebenen Ziehprozess konnte im Mittel eine Ausbeute von 95,4% erreicht werden.

### Beispiel 2 (Vergleichsbeispiel)

Auch hier wurden kompakte polykristalline Siliciumstäbe nach Stand der Technik abgeschieden (vgl. US 2010/219380 A1, Comparative example 1).

Wie im **Beispiel 1** betrug die mittlere Kristallitengröße im abgeschiedenen Material 11 µm und die Rauhigkeit der Oberfläche Ra lag bei 3,6 µm.

Anschließend wurden die Stäbe in Silicium-Bruchstücke kontaminationsarm gebrochen und entstaubt.

Eine nasschemische Behandlung erfolgte nicht.

Mit diesem Material konnte beim Ziehen eine Ausbeute von 90,8% erzielt werden.

### Beispiel 3 (Vergleichsbeispiel)

Hier wurden poröse und zerklüftete polykristalline Siliciumstäbe nach Stand der Technik abgeschieden (vgl. US 2010/219380 A1, Example 1).

Die mittlere Kristallitengröße betrug im abgeschiedenen Material etwa 16 µm und die Rauhigkeit der Oberfläche Ra lag bei 4,1 µm.

Anschließend wurden die Stäbe in Silicium-Bruchstücke kontaminationsarm gebrochen und entstaubt.

Mit diesem Material wurde die Ausbeute von nur 67,3% erreicht.

### Beispiel 4 (Vergleichsbeispiel)

In diesem Beispiel wurden poröse und zerklüftete polykristalline Siliciumstäbe nach Stand der Technik (wie in US 2010/219380 A1, Example 1 beschrieben) abgeschieden.

Wie im **Beispiel 3** betrug die mittlere Kristallitengröße im abgeschiedenen Material 16 µm und die Rauhigkeit der Oberfläche Ra lag bei 4,1 µm.

Anschließend wurden die Stäbe nach US2007/235574 A1 in Silicium-Bruchstücke gebrochen, welche nasschemisch nach DE102008040231 A1 gereinigt wurden.

Beim Ziehen dieses Materials lag die Ausbeute im Mittel bei 68,1%.

### Beispiel 5

In diesem Beispiel wurde wie im **Beispiel 2** vorgegangen, mit dem Unterschied, dass nach der Abscheidung Polysiliciumstäbe mit Polyethylensäcken überzogen und aus dem Abscheidereaktor unter Stickstoffatmosphäre ausgebaut wurden.

Durch diese Änderung konnte die Ausbeute beim Einkristallziehen überraschenderweise um 2,1% auf 92,9% gesteigert werden.

### Beispiel 6

In diesem Beispiel wurden kompakte Polysiliciumstäbe abgeschieden.

Die Abscheidung verlief bis zum Durchmesser von 149 mm wie in US 2010/219380 A1 Comparative example 1 beschrieben.

Dann wurden die Prozessparameter wie folgt geändert: Stab-Temperatur um 120 °C auf 1150 °C angehoben, die TCS-Zufuhr auf 0,05 kMol/h pro 1 m² Staboberfläche und die TCS-Konzentration auf 4 Mol-% gesenkt.

Diese Prozessparameter wurden beibehalten, bis die Stäbe den Durchmesser von 150 mm erreicht haben.

Die erhaltenen erfindungsgemäßen Stäbe waren glänzend und wiesen eine äußere Schicht der Dicke 0,5 mm mit einer deutlich gröberen Mikrostruktur auf.

Die mittlere Kristallitengröße betrug im Stabinneren 11 µm und in der äußeren Schicht 37 µm.

Die Rauhigkeit der Staboberfläche hatte einen Ra-Wert von 5,1 µm.

Anschließend wurden die Stäbe in Silicium-Bruchstücke kontaminationsarm gebrochen und entstaubt.

Mit diesem erfindungsgemäßen Material konnte beim Ziehen die Ausbeute von 95,2% erzielt werden.

### Beispiel 7

In diesem Beispiel wurden poröse und zerklüftete polykristalline Siliciumstäbe abgeschieden.

Die Abscheidung verlief bis 148 mm im Wesentlichen wie in US 2010/219380 A1, Example 1 beschrieben. Die Stabtemperatur lag bei 1075°C (dabei betrug die an der Unterseite der Brücke gemessene Temperatur wie dort beschrieben 1300 bis 1413 °C).

Dann wurden die Prozessparameter wie folgt geändert: Stab-Temperatur um 125 °C auf 1200 °C angehoben, die Zufuhr des TCS/DCS-Gemisches auf 0,03 kMol/h pro 1 m² Staboberfläche und die TCS/DCS-Konzentration auf 3 Mol-% gesenkt.

Diese Prozessparameter wurden beibehalten, bis die Stäbe den Durchmesser von 150 mm erreicht haben.

Die erhaltenen erfindungsgemäßen Stäbe waren glänzend grau und wiesen eine äußere Schicht der Dicke 1,0 mm mit einer deutlich gröberen Mikrostruktur auf.

Die mittlere Kristallitengröße betrug im Stabinneren 16 µm und in der äußeren Schicht 52□µm.

Die Rauhigkeit der Staboberfläche hatte einen Ra-Wert von 5,6 µm.

Anschließend wurden die Stäbe in Silicium-Bruchstücke kontaminationsarm gebrochen und entstaubt.

Mit diesem erfindungsgemäßen Material konnte beim Ziehen die Ausbeute von 93,2% erzielt werden.

## Patentansprüche

1. Polykristalliner Siliciumstab, umfassend eine äußere Schicht aus polykristallinem Silicium mit einer Dicke von 0,01 bis 20 mm, wobei diese äußere Schicht Kristallite mit einer mittleren Größe von mehr als 20 µm bis maximal 80 µm beinhaltet.

2. Polykristalliner Siliciumstab nach Anspruch 1, wobei die äußere Schicht eine Oberflächenrauhigkeit von 4-10 µm aufweist.

3. Polykristalliner Siliciumstab nach Anspruch 1 oder nach Anspruch 2, der eine glänzende Oberfläche aufweist.

4. Polykristalliner Siliciumstab nach einem der Ansprüche 1 bis 3, der unterhalb der äußeren Schicht eine gleichartige Struktur aufweist, wobei diese Struktur Poren, Fugen, Spalten, Risse und Klüfte umfasst.

5. Verwendung eines polykristallinen Siliciumstabs gemäß einem der Ansprüche 1 bis 4 zur Herstellung von polykristallinen Siliciumbruchstücken durch Zerkleinern.

6. Verfahren zur Herstellung eines polykristallinen Siliciumstabs gemäß einem der Ansprüche 1 bis 4 durch Einleiten eines Reaktionsgases enthaltend eine Silicium enthaltende Komponente und Wasserstoff in einen Reaktor, wodurch polykristallines Silicium in Form von Stäben abgeschieden wird, **dadurch gekennzeichnet, dass** in einem zweiten, abschließenden Schritt der Abscheidung, der eine Dauer von 0,1 bis 50 Stunden umfasst, eine Temperatur der Stäbe um mindestens 50 °C gegenüber einem ersten Schritt erhöht wird und mehr als 1100°C beträgt, wobei im zweiten, abschließenden Schritt der Abscheidung eine Konzentration der Silicium enthaltenden Komponente im Reaktionsgas 5 mol-% oder weniger und eine Zufuhr der Silicium enthaltenden Komponente 0,25 mol pro 1 m² Staboberfläche oder weniger betragen, so dass die hergestellten polykristallinen Stäbe eine äußere Schicht mit einer Dicke von 0,01 bis 20 mm umfassen, wobei diese äußere Schicht Kristallite mit einer mittleren Größe von mehr als 20 µm bis maximal 80 µm beinhaltet.

7. Verfahren nach Anspruch 6, **dadurch gekennzeichnet, dass** nach Abscheidung des polykristallinen Siliciums die Stäbe während des Entfernens aus dem Reaktor von einem kontaminationsfreien Gas umströmt werden.

8. Verfahren nach Anspruch 6 oder nach Anspruch 7, **dadurch gekennzeichnet, dass** nach Abscheidung des polykristallinen Siliciums die Stäbe jeweils mit einem Sack überzogen werden, bevor sie aus dem Reaktor entfernt werden.

9. Verfahren nach einem der Ansprüche 6 bis 8, wobei die Stabtemperatur während des zweiten Schritts der Abscheidung mindestens 1100°C beträgt.

10. Verfahren nach einem der Ansprüche 6 bis 9, wobei die Dauer des zweiten Schritts der Abscheidung 0,1 bis 50 Stunden beträgt.

11. Verfahren nach einem der Ansprüche 6 bis 10, wobei die Siliciumstäbe nach der Abscheidung in Bruchstücke zerkleinert und entstaubt werden.

## Claims

1. Polycrystalline silicon rod comprising an outer layer of polycrystalline silicon having a thickness of 0.01 to 20 mm, wherein said outer layer comprises crystallites having a mean size of more than 20 µm to not more than 80 µm.

2. Polycrystalline silicon rod according to Claim 1, wherein the outer layer has a surface roughness of 4-10 µm.

3. Polycrystalline silicon rod according to Claim 1 or according to Claim 2, which has a shiny surface.

4. Polycrystalline silicon rod according to any of Claims 1 to 3, which has, beneath the outer layer, a similar structure, this structure comprising pores, gaps, clefts, cracks and fissures.

5. Use of a polycrystalline silicon rod according to any of Claims 1 to 4 for production of polycrystalline silicon chunks by comminuting.

6. Process for producing a polycrystalline silicon rod according to any of Claims 1 to 4 by introducing a reaction gas comprising a silicon-containing component and hydrogen into a reactor, which results in deposition of polycrystalline silicon in the form of rods, **characterized in that**, in a second, final step of the deposition that encompasses a duration of 0.1 to 50 hours, a temperature of the rods is increased by at least 50°C compared to a first step and is more than 1100°C, where a concentration of the silicon-containing component in the reaction gas in the second, final step of the deposition is 5 mol% or less and a feed of the silicon-containing component is 0.25 mol per 1 m² of rod surface area or less, such that the polycrystalline rods produced comprise an outer layer having a thickness of 0.01 to 20 mm, said outer layer including crystallites having a mean size of more than 20 µm to not more than 80 µm.

7. Process according to Claim 6, **characterized in that**, after deposition of the polycrystalline silicon, a stream of a contamination-free gas is passed around the rods while they are being removed from the reactor.

8. Process according to Claim 6 or according to Claim 7, **characterized in that**, after deposition of the polycrystalline silicon, the rods in each case are covered with a sack before they are removed from the reactor.

9. Process according to any of Claims 6 to 8, wherein the rod temperature during the second step of the deposition is at least 1100°C.

10. Process according to any of Claims 6 to 9, wherein the duration of the second step of the deposition is 0.1 to 50 hours.

11. Process according to any of Claims 6 to 10, wherein the silicon rods after the deposition are comminuted into chunks and dedusted.

## Revendications

1. Barreau de silicium polycristallin, comprenant une couche extérieure en silicium polycristallin d'une épaisseur de 0,01 à 20 mm, cette couche extérieure contenant des cristallites d'une taille moyenne de plus de 20 µm à au plus 80 µm.

2. Barreau de silicium polycristallin selon la revendication 1, dans lequel la couche extérieure présente une rugosité de surface de 4 à 10 µm.

3. Barreau de silicium polycristallin selon la revendication 1 ou la revendication 2, qui présente une surface brillante.

4. Barreau de silicium polycristallin selon l'une quelconque des revendications 1 à 3, qui présente sous la couche extérieure une structure semblable, cette structure comprenant des pores, des joints, des fentes, des fissures et des crevasses.

5. Utilisation d'un barreau de silicium polycristallin selon l'une quelconque des revendications 1 à 4 pour la fabrication de fragments de silicium polycristallin par broyage.

6. Procédé de fabrication d'un barreau de silicium polycristallin selon l'une quelconque des revendications 1 à 4 par introduction d'un gaz réactionnel contenant un composant contenant du silicium et de l'hydrogène dans un réacteur, du silicium polycristallin étant ainsi déposé sous la forme de barreaux, **caractérisé en ce que**, lors d'une seconde étape finale du dépôt, qui comprend une durée de 0,1 à 50 heures, une température des barreaux est augmentée d'au moins 50 °C par rapport à une première étape et est de plus de 1 100 °C ; lors de la seconde étape finale du dépôt, une concentration du composant contenant du silicium dans le gaz réactionnel étant de 5 % en moles ou moins et un apport du composant contenant du silicium étant de 0,25 mole par 1 m² de surface de barreau ou moins, de sorte que les barreaux polycristallins fabriqués comprennent une couche extérieure d'une épaisseur de 0,01 à 20 mm, cette couche extérieure contenant des cristallites d'une taille moyenne de plus de 20 µm à au plus 80 µm.

7. Procédé selon la revendication 6, **caractérisé en ce qu'**après le dépôt du silicium polycristallin, les barreaux sont entourés d'un gaz exempt de contamination pendant le déchargement du réacteur.

8. Procédé selon la revendication 6 ou la revendication 7, **caractérisé en ce qu'**après le dépôt du silicium polycristallin, les barreaux sont chacun recouverts avec un sac avant d'être déchargés du réacteur.

9. Procédé selon l'une quelconque des revendications 6 à 8, dans lequel la température des barreaux pendant la seconde étape du dépôt est d'au moins 1 100 °C.

10. Procédé selon l'une quelconque des revendications 6 à 9, dans lequel la durée de la seconde étape du dépôt est de 0,1 à 50 heures.

11. Procédé selon l'une quelconque des revendications 6 à 10, dans lequel les barreaux de silicium sont broyés en fragments après le dépôt et dépoussiérés.
